# EUROPEAN PATENT APPLICATION

(11) **EP 1 661 453 A1**
(43) Date of publication of application: **31.05.2006**
(21) Application number: 05025493.7
(22) Date of filing: 23.11.2005
(51) Int. Cl.: A01K 5/01

(54) **Feeding trough**

(30) Priority: 24.11.2004 DK 200401828
(71) Applicant: Polyflex ApS, 7480 Vildbjerg (DK)
(72) Inventor: Sorensen, Villy Juhl, 7430 Ikast (DK)
(74) Representative: Nielsen, Leif

(57) **Abstract**

The present invention concerns a manger (1) for storing animals' feed, where the manger (1) includes a feeding trough (2) and a number of resting plates (3), wherein the resting plates (3) are connected with preferably a bottom part (4) of the feeding trough (2) and extends from the bottom part (4).

## Description

### Field of the Invention

The present invention concerns a manger for storing animals' feed, preferably feed for pigs, where the manger includes a feeding trough and a number of resting plates.

### Background of the Invention

In connection with feeding animals, e.g. cattle, pigs, horses and sheep, typically feed dispensers and/or mangers placed on the floor in the stable are used. The manger is filled with feed and/or water and is typically open and accessible for the animals.

In order to optimise the growth of the animals or to prevent illness, the feed and/or the water is added a small amount of acid. This entails that the manger has to be made of e.g. polymeric concrete and/or plastic which can resist the corrosion caused by the water or the feed.

However, acid in the feed has the drawback that the floor around the manger is rapidly corroded, because the animals spill feed/water on the floor. This means that the floor has to be repaired frequently, entailing additional costs and periods where the stable cannot be used.

The above has been attempted relieved by treating the floor with e.g. an epoxy coating which protects the floor against the acid in the feed/water. The disadvantage of using epoxy coating is that it lacks wear-resistance, as the coating is exposed to wear by the animals, for example.

Another solution is to make protective plates of e.g. polymeric concrete or plastic, which are mounted permanently either around the manger or under the manger. The disadvantage of protecting plates is that they are costly to make and that the subsequent mounting of a protective plate is time-consuming. It may furthermore be cumbersome to assemble the protecting plates and the manger, if e.g. the protecting plates cannot be adapted by grinding, whereby the risk of cracks in the joint is increased, implying problems with hygiene, since old feed and/or manure from the stable can accumulate in these cracks and provide ground for bacteria that are harmful to the animals.

### Object of the Invention

It is an object of the present invention to provide a manger which by its design prevents the surrounding floor area from corroding and which simultaneously reduces the time for mounting the manger.

This object is achieved with a manger as specified in the preamble of claim 1 and where the resting plates are connected with preferably a bottom part of the feeding trough and extends out from the bottom part.

### Description of the Invention

In connection with feeding animals, mangers disposed on the floor are used, so that the animals have free access to the manger and easily may reach the feed or the drinking water. Since the feed and/or the water contains a certain amount of acid, it is furthermore of importance that the manger is designed with a resting plate that covers and protects the surrounding floor area against corrosion.

According to the present invention, the manger is designed with a resting plate which is connected with preferably a bottom part of the feeding trough, where the resting plate extends out from the bottom part, entailing that the resting plate bears on the floor, whereby the manger is standing very stable, even when the animals eat from the trough.

It is essential that the resting plate extends out from the feeding trough, thus covering the surrounding floor area, which is protected against corrosion thereby. The length and the shape with which the resting plate extends from the feeding trough may vary, depending on where the manger is to be mounted and depending on the size of the manger or the animal species living in the stable.

The manger is e.g. designed with a resting plate which extends about 20 cm out from the feeding trough and is used for e.g. pigs.

In order to optimise mounting of the manger according to the present invention, the said resting plate and feeding trough are designed so that they may be integrated with each other and become a unit. The manger may thus be placed in the stable and protect the surrounding floor area. The manger is ideal for placing in new as well as existing stable facilities. One way of integrating the resting plate and the feeding trough is to make the manger with trough and resting plate as cast in one piece.

In order that the manger can resist the acid in the feed and the water, the resting plate and the manger are made of polymeric concrete and/or plastic, as both materials are acid proof and can be shaped by e.g. moulding.

Alternatively, the manger may be made of a corrosion-resistant material, as e.g. stainless steel which also has acid proof properties.

In addition to protect the surrounding floor area, by a manger according to the present invention there is achieved the following advantages:
- easy and time-saving mounting of the manger, as it just has to be placed on the desired spot in the stable and does not require separate installation of protective plates;
- hygienic manger where no cracks appear between trough and resting plate, entailing that the manger is easy to clean, as both trough and resting plate may e.g. readily flushed/washed after use;
- cheap manger since loose protection plates are costly to make and time-consuming to mount;
- a manger which is readily made by e.g. moulding.

### Short Description of the Drawing

The present invention is described in the subsequent Figures, where:

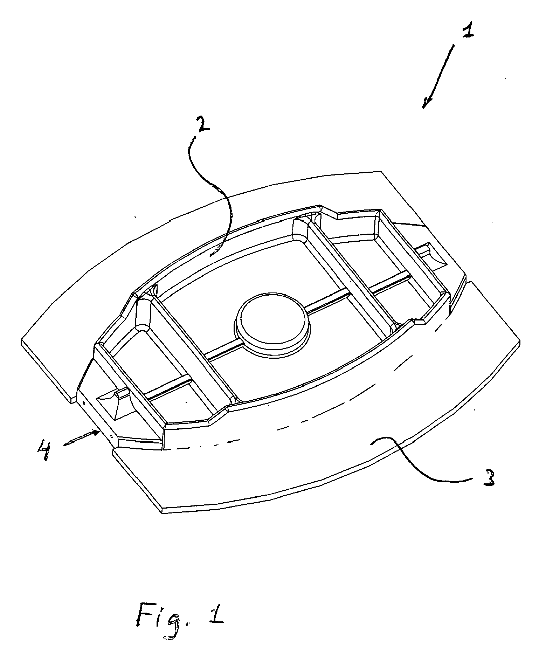

Fig. 1 shows a manger according to the present invention.

### Detailed Description of the Invention

Fig. 1 shows a manger 1 which includes a feeding trough 2 and a resting plate 3 which are cast in one so that the resting plate 3 is connected with a bottom part 4 of the feeding trough 2. The resting plate extends out from the feeding trough 2 and thereby covers and protects the surrounding floor area (not shown).

## Claims

1. A manger (1) for storing animals' feed, where the manger includes a feeding trough (2) and a number of resting plates (3), **characterised in that** the resting plates (3) are connected with preferably a bottom part (4) of the feeding trough (2) and extends from the bottom part (4).

2. Manger (1) according to claim 1, **characterised in that** the feeding trough (2) and the resting plate (3) are designed so that they may be integrated with each other.

3. Manger (1) according to any of claims 1-2, **characterised in that** the feeding trough (2) and the resting plate (3) are made of polymeric concrete, plastic and/or a corrosion-resistant material.
